(19) Europäisches Patentamt / European Patent Office / Office européen des brevets

(11) **EP 1 843 336 A2**

(12) **EUROPEAN PATENT APPLICATION**

(43) Date of publication:
**10.10.2007 Bulletin 2007/41**

(51) Int Cl.:
*G11B 7/135* (2006.01)    *G11B 7/09* (2006.01)

(21) Application number: **07007005.7**

(22) Date of filing: **03.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.04.2006 JP 2006106702**

(71) Applicant: **Funai Electric Co., Ltd.**
**Daito-shi**
**Osaka 574-0013 (JP)**

(72) Inventors:
• **Shihara, Tetsuya**
**Daito-shi**
**Osaka 574-0013 (JP)**

• **Shimizu, Shinya**
**Daito-shi**
**Osaka 574-0013 (JP)**
• **Eiza, Tsuyoshi**
**Daito-shi**
**Osaka 574-0013 (JP)**
• **Nagashima, Kenji**
**Daito-shi**
**Osaka 574-0013 (JP)**

(74) Representative: **Beetz & Partner**
**Steinsdorfstrasse 10**
**80538 München (DE)**

(54) **Aberration correcting unit, optical pickup device, information reproducing apparatus, and aberration correcting method**

(57)    A control portion (32) of aberration correcting unit includes: a potential calculating block (322) that determines a potential to be applied to each of the divided electrodes of the first transparent electrode (161) and the second transparent electrode (162); a change quantity calculating block (323) that determines a potential change quantity that is a difference between the determined potential and a potential that is already applied with respect to each of the divided electrodes of the first transparent electrode and the second transparent electrode, and a potential changing block (324) that changes the potentials to be applied to the divided electrodes of the first transparent electrode and the second transparent electrode sequentially to the potentials determined by the potential calculating block based on the potential change quantity.

FIG.1

**EP 1 843 336 A2**

## Description

## BACKGROUND OF THE INVENTION

Field of the Invention

The present invention relates to an aberration correcting unit that is provided to an optical device such as an optical pickup device. In particular, the present invention relates to an aberration correcting unit that enables correction of wave aberration, an optical pickup device equipped with the unit, an information reproducing apparatus equipped with the device, an aberration correcting program and an aberration correcting method.

Description of Related Art

Recently, optical recording media including a compact disc (CD) and a digital versatile disc (DVD) have become commonplace and widely available. Furthermore, in order to increase a quantity of information recorded on the optical recording medium, researches on the high density of the optical recording medium are being carried on. As a result, a high density optical recording medium such as a High-Definition DVD (HD DVD) or a Blu-Ray Disc (BD) is being available in the market, for example.

When such an optical recording medium is read or written, it is normal to use an optical pickup device that projects a light beam to the optical recording medium so that information can be reproduced or recorded on the medium. A numerical aperture (NA) of an objective lens and a wavelength of a light source that are used for the optical pickup device have different values in accordance with a type of the optical recording medium. For example, an objective lens having an NA of 0.50 and a light source having a wavelength of 780 nm are used for a CD, an objective lens having an NA of 0.65 and a light source having a wavelength of 650 nm are used for a DVD, an objective lens having an NA of 0.65 and a light source having a wavelength of 405 nm are used for an HD DVD, and an objective lens having an NA of 0.85 and a light source having a wavelength of 405 nm are used for a BD.

Since an NA of an objective lens and a wavelength have different values in accordance with a type of the optical recording medium in this way, it is considered to use different optical pickup devices for different optical recording media. However, it is more convenient to use a single optical pickup device that can read and write a plurality of optical recording media. Such an optical pickup device is already developed. For example, JP-A-2001-273663 describes an optical pickup device that can record and reproduce information on a plurality of optical recording media with a single objective lens.

In the case where a plurality of optical recording media are supported by a single objective lens, even if the objective lens is adjusted for one type of optical recording medium so that spherical aberration is not generated, spherical aberration may be generated when information is reproduced or recorded on another optical recording medium. Therefore, JP-A-2001-273663 discloses an aberration correcting unit that includes a liquid crystal portion disposed in the optical pickup device for correcting the spherical aberration by controlling a voltage that is applied to the liquid crystal portion. The aberration correcting unit that is disposed for this purpose has two transparent electrodes that constitute the liquid crystal portion. One of the transparent electrodes is divided into a plurality of areas in a concentric manner, and the other transparent electrode is not divided but a common electrode. Voltages that are applied to the areas of the divided transparent electrode are controlled so that the spherical aberration is corrected.

In addition, the voltages that are applied to the divided electrode and the common electrode of the above-mentioned aberration correcting unit are controlled based on magnitude of a detected signal that is generated by the optical pickup device when it receives a reflection light beam from the optical recording medium. More specifically, the voltages that are applied to the divided electrode and the common electrode are altered by predetermined levels so as to search a condition of a maximum level of the detected signal.

According to the above-mentioned method, however, the time necessary for deciding the potentials to be applied to the divided electrode and the common electrode and setting (or altering) the potentials (hereinafter referred to as an adjustment time) may be increased, so that convenience may be impaired. In addition, since the spherical aberration remains during the adjustment time, the detected signal during the period of time may be unstable.

## SUMMARY OF THE INVENTION

In view of the above described problem, it is an object of the present invention to provide an aberration correcting unit that can stable the detected signal during the adjustment time, an optical pickup device equipped with the aberration correcting unit, an information reproducing apparatus equipped with the device, a program thereof and an aberration correcting method.

To attain the above described object, an aberration correcting unit in accordance with the first aspect of the present invention includes: a liquid crystal portion that includes a first transparent electrode having a plate-like shape divided into areas of a first number of division in a concentric manner, a second transparent electrode having a plate-like shape divided into areas of a second number of division that is larger than the first number of division in a concentric manner, and liquid crystal that is sandwiched between the first transparent electrode and the second transparent electrode, for generating a phase difference corresponding to a predetermined potential with respect to an incident light beam; a lens portion that condenses the light beam after passing through the liquid crystal portion onto a predetermined light condensing position; a driving portion that applies a predetermined potential for correcting aberration of the light beam to each of the divided electrodes of the first transparent electrode and the second transparent electrode; and a control portion that controls the driving portion. And the aberration correcting unit is characterized by a structure in which the control portion includes a potential calculating block that determines a potential to be applied to each of the divided electrodes of the first transparent electrode and the second transparent electrode, a change quantity calculating block that determines a potential change quantity that is a difference between the determined potential and a potential that is already applied with respect to each of the divided electrodes of the first transparent electrode and the second transparent electrode, and a potential changing block that changes the potentials to be applied to the divided electrodes of the first transparent electrode and the second transparent electrode sequentially to the potentials determined by the potential calculating block based on the potential change quantity.

The aberration correcting unit in accordance with the second aspect of the present invention is characterized by a structure in which the control portion further includes a potential difference memory block for storing potential differences to be applied between each of the divided electrodes of the first transparent electrode and each of the divided electrodes of the second transparent electrode that are opposed to those of the first transparent electrode with respect to each wavelength of the light beam, and the potential calculating block determines the potential to be applied by reading out the potential difference corresponding to the wavelength of the light beam from the potential difference memory block, in the above first structure.

The aberration correcting unit in accordance with the third aspect of the present invention is characterized by a structure in which the light condensing position can be changed to a plurality of different positions, the potential difference memory block stores the potential differences to be applied between each of the divided electrodes of the first transparent electrode and each of the divided electrodes of the second transparent electrode that are opposed to those of the first transparent electrode with respect to each of the light condensing positions, and the potential calculating block determines the potential to be applied by reading out the potential difference corresponding to the light condensing position from the potential difference memory block, in the above first or second structure.

The aberration correcting unit in accordance with the fourth aspect of the present invention is characterized by a structure in which the potential difference memory block stores the potential differences to be applied between each of the divided electrodes of the first transparent electrode and each of the divided electrodes of the second transparent electrode that are opposed to those of the first transparent electrode in association with environmental temperature, and the potential calculating block determines the potential to be applied by reading out the potential difference corresponding to the environmental temperature from the potential difference memory block, in the above first to third structure.

The aberration correcting unit in accordance with the fifth aspect of the present invention is characterized by a structure in which the second number of division is an integral multiple of the first number of division, and the first transparent electrode and the second transparent electrode are divided equally into areas of the first number of division and areas of the second number of division, respectively, in the above first to fourth structure.

The aberration correcting unit in accordance with the sixth aspect of the present invention is characterized by a structure in which the potential changing block changes the potentials to be applied to the divided electrodes of the first transparent electrode sequentially to the potentials determined by the potential calculating block based on the potential change quantity, and after that it changes the potentials to be applied to divided electrodes of the second transparent electrode sequentially to the potentials determined by the potential calculating block based on the potential change quantity, in the above first to fifth structure.

The aberration correcting unit in accordance with the seventh aspect of the present invention is characterized by a structure in which the potential changing block changes the potentials to be applied to the divided electrodes of the first transparent electrode and the second transparent electrode sequentially to the potentials determined by the potential calculating block in the descending order of the potential change quantity, in the above first to sixth structure.

To attain the above described object, an optical pickup device in accordance with the eighth aspect of the present invention includes: an optical pickup device equipped with the aberration correcting unit in accordance with any one of the above described first to seventh aspect of the present invention for projecting a light beam onto an optical recording medium so that information recorded on the optical recording medium is reproduced; a medium driving device that drives the optical recording medium to rotate; a moving device that moves the optical pickup device in the radial direction of the optical recording medium; and an output device that obtains information recorded on the optical recording medium via the optical pickup device and reproduces the information.

To attain the above described object, an information reproducing apparatus in accordance with the ninth aspect of the present invention includes: an optical pickup device equipped with the aberration correcting unit in accordance with any one of the above described first to seventh aspect of the present invention for projecting a light beam onto an optical recording medium so that information recorded on the optical recording medium is reproduced; a medium driving device that drives the optical recording medium to rotate; a moving device that moves the optical pickup device in the radial direction of the optical recording medium; and an output device that obtains information recorded on the optical recording medium via the optical pickup device and reproduces the information.

To attain the above described object, a method for correcting aberration in accordance with the tenth aspect of the present invention is characterized by the method for correcting aberration with an aberration correcting unit that is provided to an optical device, the aberration correcting unit is characterized by including: a liquid crystal unit having a first transparent electrode having a plate-like shape divided into areas of a first number of division in a concentric manner, a second transparent electrode having a plate-like shape divided into areas of a second number of division that is larger than the first number of division in a concentric manner, and liquid crystal that is sandwiched between the first transparent electrode and the second transparent electrode, for generating a phase difference corresponding to a predetermined potential with respect to an incident light beam; a lens unit that condenses the light beam after passing through the liquid crystal unit onto a predetermined light condensing position; a driving unit that applies a predetermined potential for correcting aberration of the light beam to each of the divided electrodes of the first transparent electrode and the second transparent electrode, and a control unit that controls the driving unit, and the method is characterized by comprising the steps of: determining a potential to be applied to each of the divided electrodes of the first transparent electrode and the second transparent electrode; determining a potential change quantity that is a difference between the determined potential and a potential that is already applied with respect to each of the divided electrodes of the first transparent electrode and the second transparent electrode; and changing the potentials to be applied to the divided electrodes of the first transparent electrode and the second transparent electrode to the potentials determined by the potential calculating block in descending sequential order based on the potential change quantity.

According to the aberration correcting unit of the first structure, a potential to be applied to each of the divided electrodes of the first transparent electrode and the second transparent electrode is determined, and a potential change quantity that is a difference between the determined potential and a potential that is already applied is determined. Then, based on the potential change quantity, the potentials to be applied to the divided electrodes of the first transparent electrode and the second transparent electrode are changed sequentially. Therefore, the detected signal during the adjustment time can be stabilized.

More specifically, since the potentials are changed based on the determined potential change quantity, the potentials to be applied to the divided electrodes of the first transparent electrode and the second transparent electrode are changed so as to approach gradually to the potentials to be set. Thus, a stable detected signal can be obtained.

According to the aberration correcting unit of the second structure, potential differences to be applied between each of the divided electrodes of the first transparent electrode and each of the divided electrodes of the second transparent electrode that are opposed to those of the first transparent electrode are stored with respect to each wavelength of the light beam. So, the potential to be applied is determined by reading out the potential difference corresponding to the wavelength of the light beam. Therefore, the potentials to be applied to the divided electrodes can be determined in a short time.

According to the aberration correcting unit of the third structure, potential differences to be applied between each of the divided electrodes of the first transparent electrode and each of the divided electrodes of the second transparent electrode that are opposed to those of the first transparent electrode are stored with respect to each light condensing position. So the potential to be applied is determined by reading out the potential difference corresponding to the light condensing position. Therefore, the potentials to be applied to the divided electrodes can be determined in a short time even in the case where the light condensing position alters.

For example, in the case where two recording layers are formed on the disc surface like a BD (Blu-ray Disc), it is necessary to set the potential to be applied to each of the divided electrodes of the first transparent electrode and the second transparent electrode to a value corresponding to each of the layers because the light condensing position alters in the direction of disc thickness.

According to the aberration correcting unit of the fourth structure, potential differences to be applied between each of the divided electrodes of the first transparent electrode and each of the divided electrodes of the second transparent electrode that are opposed to those of the first transparent electrode are stored in association with the environmental temperature. So the potential to be applied is determined by reading out the potential difference corresponding to the environmental temperature. Therefore, the potentials to be applied to the divided electrodes can be determined in a short time even in the case where the environmental temperature alters.

According to the aberration correcting unit of the fifth structure, the second number of division that indicates how many areas the second transparent electrode is divided in a concentric manner is an integral multiple of the first number of division that indicates how many areas the first transparent electrode is divided in a concentric manner. The first transparent electrode and the second transparent electrode are divided equally into areas of the first number of division and areas of the second number of division, respectively. Therefore, the setting can be performed roughly with the potentials to be applied to the divided electrodes of the first transparent electrode and finely with the potentials to be applied to the divided electrodes of the second transparent electrode, in a functionally separated manner. As a result, the potentials to be applied to the divided electrodes can be determined easily.

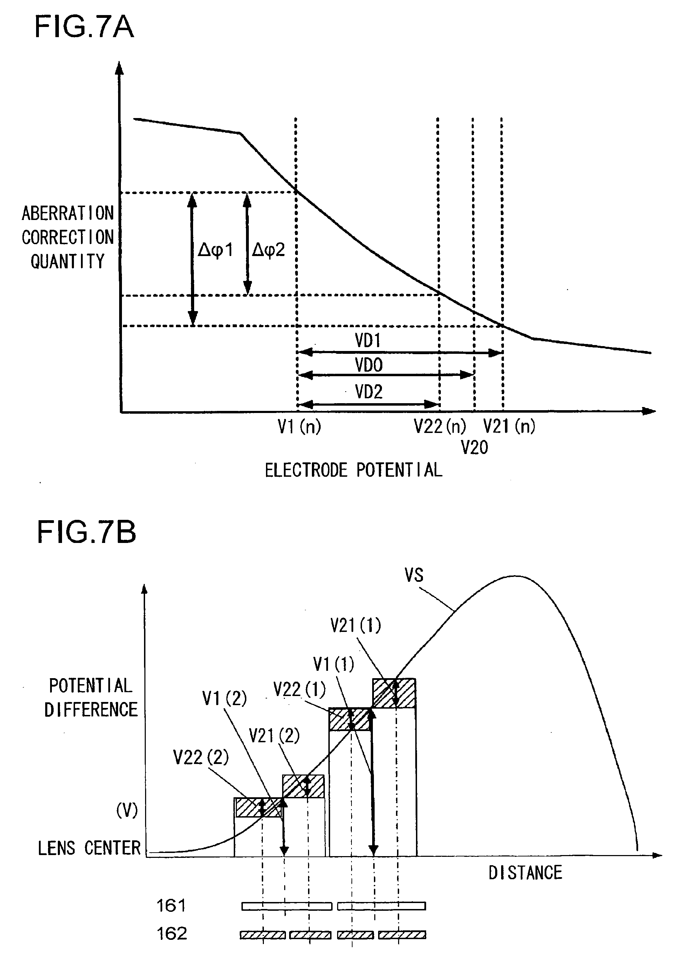

In other words, the potential of all the divided electrode of the second transparent electrode is regarded as the reference potential first. Next, with respect to this reference potential, a voltage to be applied for correcting aberration (the potential difference between each of the divided electrodes of the first transparent electrode and each of the divided electrodes of the second transparent electrode that are opposed to those of the first transparent electrode) is approximated by using voltages of the first number of division, so that the potentials to be applied to the divided electrodes of the first transparent electrode are determined. Then, the difference between the potential to be applied to each of the divided electrodes of the first transparent electrode and the voltage to be applied for correcting aberration is approximated by using voltages of the second number of division, so that the potentials to be applied to the divided electrodes of the second transparent electrode are determined (see Fig. 7B that will be described later). In this way, the potential difference to be applied between each of the divided electrodes of the first transparent electrode and each of the divided electrodes of the second transparent electrode that are opposed to those of the first transparent electrode can be set to a value stored in the potential difference memory block.

According to the aberration correcting unit of the sixth structure, the potentials to be applied to the divided electrodes of the first transparent electrode are changed sequentially based on the potential change quantity, and after that the potentials to be applied to divided electrodes of the second transparent electrode are changed sequentially based on the potential change quantity. Therefore, a large detected signal can be obtained quickly.

According to the aberration correcting unit of the seventh structure, the potentials to be applied to the divided electrodes of the first transparent electrode and the second transparent electrode are changed sequentially in the descending order of the potential change quantity. Therefore, a large detected signal can be obtained quickly.

According to the optical pickup device of the eighth structure, it is possible to realize the optical pickup device in which the detected signal during the adjustment time can be stabilized because the device is equipped with the aberration correcting unit having either one of the first to the seventh structure.

According to the information reproducing apparatus of the ninth structure, it is possible to realize the information reproducing apparatus in which the detected signal during the adjustment time can be stabilized because the apparatus includes the optical pickup device equipped with the aberration correcting unit having either one of the first to the seventh structure.

According to the aberration correcting program of the tenth structure, the potential to be applied to each of the divided electrodes of the first transparent electrode and the second transparent electrode is determined, and the potential change quantity that is a difference between the determined potential and a potential that is already applied is determined. Then, based on the potential change quantity, the potentials to be applied to the divided electrodes of the first transparent electrode and the second transparent electrode are changed sequentially. Therefore, the detected signal during the adjustment time can be stabilized.

More specifically, since the potentials are changed based on the determined potential change quantity, the potentials to be applied to the divided electrodes of the first transparent electrode and the second transparent electrode are changed so as to approach gradually to the potentials to be set. Thus, a stable detected signal can be obtained.

BRIEF DESCRIPTION OF THE DRAWINGS

Fig. 1 is a block diagram showing an example of a disc player according to the present invention.
Fig. 2 is a block diagram showing an example of an optical system of an optical pickup device equipped with an aberration correcting unit according to the present invention.
Fig. 3 is a block diagram (a cross section) showing an example of a liquid crystal portion.
Figs. 4A and 4B are block diagrams showing an example of electrode patterns of a first transparent electrode and a second transparent electrode.
Fig. 5 is a block diagram showing an example of a structure for setting potentials to the first transparent electrode and the second transparent electrode.
Fig. 6 is a functional block diagram showing an example of a functional structure of a DSP.
Figs. 7A and 7B are explanatory diagrams showing an example of a method for determining potentials to be applied to the first transparent electrode and the second transparent electrode.
Figs. 8A-8D are explanatory diagrams showing a method for altering potentials to be applied to the first transparent electrode and the second transparent electrode.

DETAILED DESCRIPTION OF THE PREFERRED EMBODIMENTS

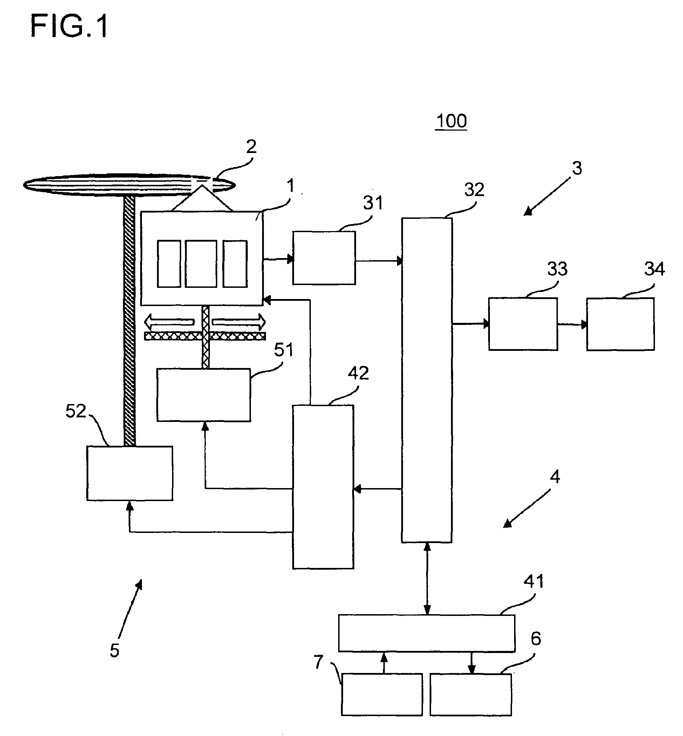

Hereinafter, embodiments of the present invention will be described with reference to the attached drawings. Fig. 1 is a block diagram showing an example of a disc player according to the present invention. A disc player 100 (an information reproducing apparatus) is equipped with an optical pickup device 1 according to the present invention, an output device 3, an instructing device 4, a driving device 5, a display portion 6 and an operating portion 7.

The optical pickup device 1 projects a light beam onto an optical recording medium 2 so as to reproduce various information such as audio information or image information recorded on the optical recording medium 2 (a CD, a DVD or a BD).

The output device 3 is equipped with an RF amplifier 31, a digital signal processor (DSP) 32, a reproduction process circuit 33 and an output circuit 34, for converting the information including the audio information and the image information from the optical pickup device 1 into sounds and images so as to supply them to a speaker and a monitor (not shown).

The RF amplifier 31 amplifies the information including the audio information and the image information from the optical pickup device 1. The DSP 32 (a computer, a control portion and a part of an aberration correcting unit) and the reproduction process circuit 33 performs various information processing (e.g., image processing and the like) for reproduction on the information from the RF amplifier 31. The output circuit 34 performs a DA conversion process and the like so as to deliver the information from the reproduction process circuit 33 to the speaker and the monitor (not shown).

The instructing device 4 is equipped with a system controller 41 and a driver 42, for controlling operations of the optical pickup device 1 and the driving device 5 based on instructions received from the operating portion 7. The system controller 41 receives information from the operating portion 7 and transmits the same to the DSP 32, and it also transmits information from the DSP 32 to the display portion 6. The driver 42 (a driving portion, a part of a medium driving device and a part of a moving device) controls operations of the optical pickup device 1 and the driving device 5 based on instructions from the DSP 32.

The driving device 5 is equipped with a feed motor 51 and a spindle motor 52. The feed motor 51 (a part of the moving device) moves the optical pickup device 1 in the radial direction of the optical recording medium 2 based on an instruction from the driver 42. The spindle motor 52 (a part of the medium driving device) drives the optical recording medium 2 to rotate based on an instruction from the driver 42.

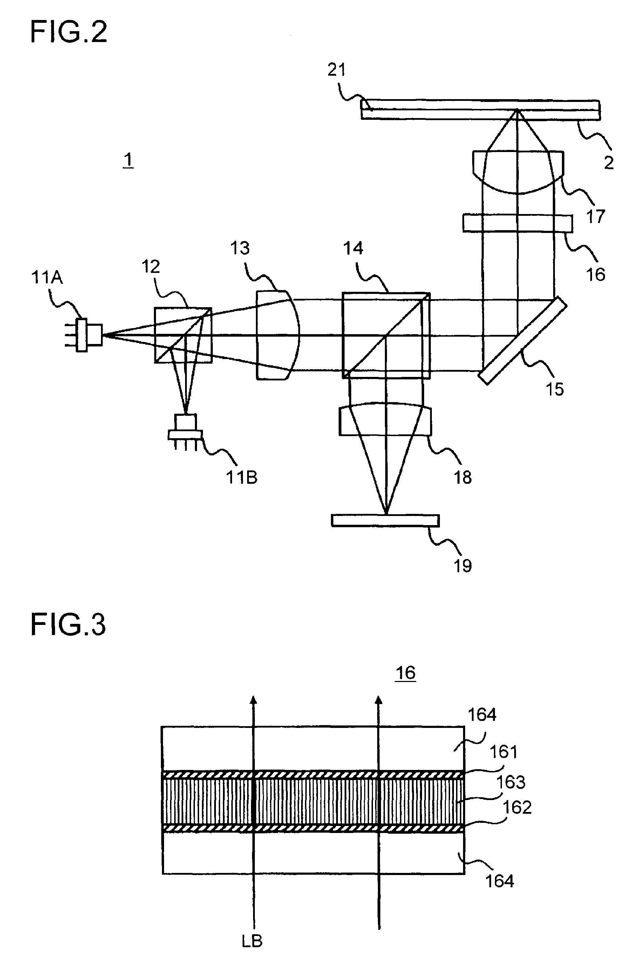

Fig. 2 is a block diagram showing an example of an optical system of an optical pickup device 1 equipped with the aberration correcting unit according to the present invention. The optical pickup device 1 projects a light beam onto three types of optical recording media 2 including a CD, a DVD and a BD and receives a reflection light, so as to read information recorded on a recording surface 21 of the optical recording medium 2. Note that types of the optical recording media 2 that can be read by the optical pickup device 1 are not limited to the three types of the present embodiment but can be modified variously within the scope of the present invention without deviating from the same. For example, it is possible to adopt a structure for reproducing information recorded on two types of recording surface 21 of a CD and a DVD.

The optical pickup device 1 is equipped with a first light source 11A, a second light source 11B, a dichroic prism 12, a collimator lens 13, a beam splitter 14, an upstand mirror 15, a liquid crystal portion 16, an objective lens 17, a detection lens 18 and a photo detector 19.

The first light source 11A is a semiconductor laser that emits a light beam of a 650 nm band supporting a CD and a DVD, while the second light source 11B is a semiconductor laser that emits a light beam of a 405 nm band supporting a BD. Although each of the light sources 11A and 11B uses the semiconductor laser that emits a light beam having a single wavelength in the present embodiment, this should not be interpreted in a limiting manner. For example, it is possible to use a two-wavelength integrated semiconductor laser that has two light emission points so that two light beams of different wavelengths can be emitted.

The dichroic prism 12 passes the light beam emitted from the first light source 11A for emitting a light beam for a DVD, while it reflects the light beam emitted from the second light source 11B for emitting a light beam for a BD. Then, the optical axis of the light beam emitted from the first light source 11A matches the optical axis of the light beam emitted from the second light source 11B. The light beam that passed through the dichroic prism 12 or was reflected by the same enters the collimator lens 13.

The collimator lens 13 converts the light beam that passed through the dichroic prism 12 into parallel rays. Here, the parallel rays mean light in which all the optical paths of the light beams emitted from the first light source 11A and the second light source 11B are substantially parallel with the optical axis. The light beam that is converted into the parallel rays by the collimator lens 13 enters the beam splitter 14.

The beam splitter 14 works as a light separating element that separates an incident light beam. It passes the light beam emitted from the collimator lens 13 and leads it to the optical recording medium 2 side, while it reflects reflection light reflected by the optical recording medium 2 and leads it to the photo detector 19 side. The light beam that passed through the beam splitter 14 enters the upstand mirror 15.

The upstand mirror 15 reflects the light beam that passed through the beam splitter 14 and leads it to the optical recording medium 2. The upstand mirror 15 is tilted from the optical axis of the light beam from the beam splitter 14 by 45 degrees, so the optical axis of the light beam reflected by the upstand mirror 15 is substantially perpendicular to the recording surface 21 of the optical recording medium 2. The light beam reflected by the upstand mirror 15 enters the liquid crystal portion 16.

The liquid crystal portion 16 (a part of the aberration correcting unit) controls a change in a refractive index of liquid crystal due to a change in an orientation direction of liquid crystal molecules when a voltage is applied between transparent electrodes that sandwich the liquid crystal (not shown), so that a phase of the light beam that passes through the liquid crystal portion 16 can be controlled. Since this liquid crystal portion 16 is disposed, the spherical aberration that is generated due to a difference of wavelength or a difference of focus position between the light beams can be corrected. Note that details of the liquid crystal portion 16 will be described later with reference to Fig. 3. The light beam that passed through the liquid crystal portion 16 enters the objective lens 17.

The objective lens 17 condenses the light beam that passed through the liquid **crystal portion 16 onto the recording surface 21 of the optical recording medium 2.** Here, the objective lens 17 is designed so that spherical aberration is not generated in the light beam emitted from the light source for a BD (the second light source 11B). In this case, spherical aberration is generated in the light beam that is emitted from the light source for a DVD (the first light source 11A) and passes through the objective lens 17. Therefore, the above-mentioned liquid crystal portion 16 is disposed in the optical system of the optical pickup device 1 so that the spherical aberration is corrected. In addition, the objective lens 17 is adapted to be capable of moving in the vertical direction and in the horizontal direction in Fig. 2 when it is driven by an objective lens actuator (not shown), and the position thereof is controlled based on a focus servo signal and a tracking servo signal.

Note that the liquid crystal portion 16 is also mounted on the objective lens actuator in this structure so that it can be moved together with the objective lens 9. However, it is not always necessary to mount the liquid crystal portion 16 on the objective lens actuator, but the structure can be modified in accordance with a structure of the optical system.

The reflection light reflected by the optical recording medium 2 passes through the objective lens 17 and the liquid crystal portion 16 in this order and is reflected by the upstand mirror 15. Then, the reflection light is further reflected by the beam splitter 14 and is condensed by the detection lens 18 onto the photo detector 19.

The photo detector 19 converts the received light information into an electric signal and delivers it to the RF amplifier 31 or the like shown in Fig. 1, for example. Then, this electric signal is used as a reproduced signal of a data recorded on the recording surface 21 and further as a servo signal for performing focus control and tracking control.

Next, a structure of the liquid crystal portion 16 that is provided to the optical pickup device 1 will be described. Fig. 3 is a block diagram (a cross section) showing an example of the liquid crystal portion 16. As shown in Fig. 3, the liquid crystal portion 16 includes liquid crystal 163, two transparent electrodes 161 and 162 (a first transparent electrode 161 and a second transparent electrode 162) that sandwich the liquid crystal 163, and two glass plates 164 that sandwich the transparent electrodes 161 and 162.

The liquid crystal 163 has a characteristic of altering its refractive index when a voltage is applied between both ends so that an orientation of liquid crystal molecules inside it changes. As a result, the light beam that passes through the liquid crystal 163 will generate a phase difference corresponding to a change in a difference of optical paths that is generated by the alteration of the refractive index of the liquid crystal 163. The transparent electrodes 161 and 162 are made of ITO (Indium Tin Oxide) or the like and are transparent optically. In addition, the transparent electrodes 161 and 162 are formed and carried on the glass plate 164. Note that the transparent electrodes 161 and 162 are connected electrically to the driver 42 shown in Fig. 1, which controls a voltage to be applied to the liquid crystal portion 16.

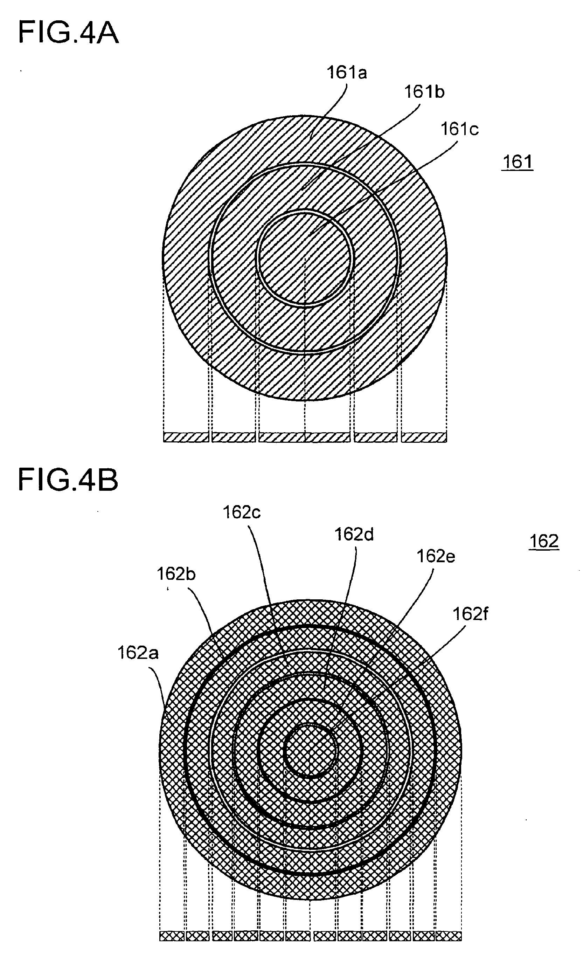

Figs. 4A and 4B are block diagrams showing an example of electrode patterns of a first transparent electrode 161 and a second transparent electrode 162. Figs. 4A and 4B show electrode patterns of the first transparent electrode 161 and the second transparent electrode 162, respectively. The upper part of each diagram shows a front view, while the lower part of each diagram shows a cross section.

As shown in Figs. 4A and 4B, the first transparent electrode 161 is divided into three areas equally in a concentric manner, so that three divided electrodes 161a-161c are formed. The second transparent electrode 162 is divided into six areas equally in a concentric manner, so that six divided electrodes 162a-162f are formed. Furthermore, as shown in Figs. 4A and 4B, each of the divided electrodes 161a-161c of the first transparent electrode 161 is opposed to two areas among the divided electrodes 162a-162f of the second transparent electrode 162. More specifically, the divided electrode 162a and the divided electrode 162b among the divided electrodes 162a-162f of the second transparent electrode 162 are opposed to the one area of the divided electrode 161a of the first transparent electrode 161. In the same manner, the divided electrode 162c and the divided electrode 162d are opposed to the one area of the divided electrode 161b of the first transparent electrode 161, and the divided electrode 162e and the divided electrode 162f are opposed to the one area of the divided electrode 161c of the first transparent electrode 161.

Thus, predetermined potentials $V1(n)$ ($n = 1-3$) are applied respectively to the divided electrodes 161a-161c of the first transparent electrode 161, predetermined potentials $V21(n)$ ($n = 1-3$) are applied respectively to the divided electrodes 162a, 162c and 162e of the second transparent electrode 162, and predetermined potentials $V22(n)$ ($n = 1-3$) are applied respectively to the divided electrode 162b, 162d and 162f. Then, six phase shift areas (areas that generate the same phase difference in the light beam entering the liquid crystal portion 16) are generated, in which voltages V22(3) - V1(3), V21 (3) - V1(3), V22(2) - V1(2), V21(2) - V1(2), V22(1) - V1 (1) and V21(1) - V1(1) are applied to the liquid crystal 163 of the liquid crystal portion 16 in this order from the inner side (see Figs. 7A and 7B). In other words, the phase shift areas are formed in the number corresponding to the number of division of the second transparent electrode 162 (six in this example).

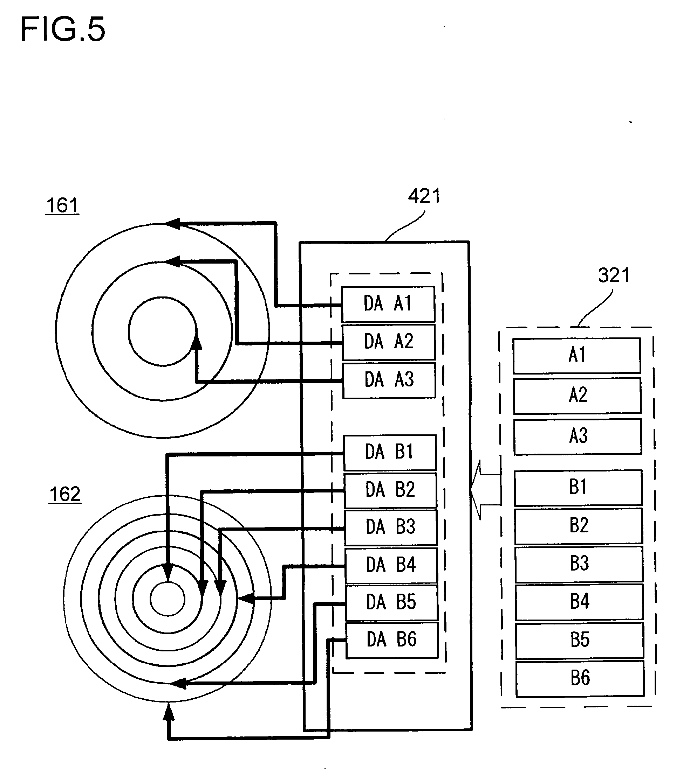

Fig. 5 is a block diagram showing an example of a structure for setting potentials to the first transparent electrode 161 and the second transparent electrode 162. The divided electrodes 161a-161c of the first transparent electrode 161 and the divided electrodes 162a-162f of the second transparent electrode 162 are connected respectively to DA conversion circuits (each of them is abbreviated to DA in Fig. 5) that are included in the liquid crystal driver 421 (a part of the driver 42 shown in Fig. 1, the driving portion). Furthermore, each of the DA conversion circuits is set based on a setting value stored in a potential difference memory block 321 that is a setting table included in the DSP 32 shown in Fig. 1 (a potential difference memory block).

In other words, a potential is set to each of the DA conversion circuits based on the setting value stored in the potential difference memory block 321 (setting table) of the DSP 32. It is converted into an analog value in each of the DA conversion circuits, so that potentials set in the DA conversion circuits are applied to the divided electrodes 161a-161c of the first transparent electrode 161 and divided electrodes 162a-162f of the second transparent electrode 162.

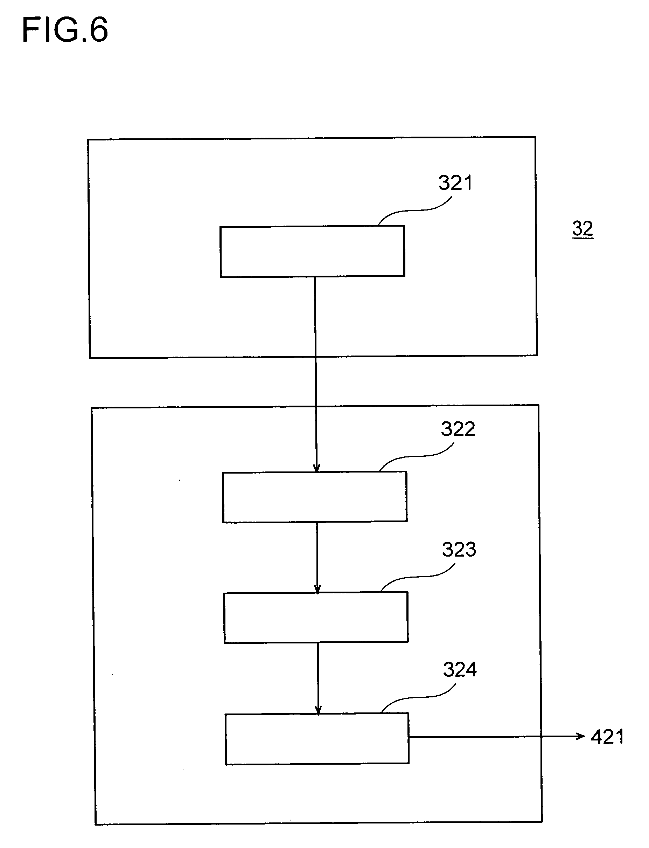

Fig. 6 is a functional block diagram showing an example of a functional structure of the DSP 32. The DSP 32 is equipped with a random access memory (RAM), a micro processing unit (MPU) and a read only memory (ROM, not shown). The RAM includes the potential difference memory block 321, and the MPU includes a potential calculating block 322, a change quantity calculating block 323 and a potential changing block 324.

Here, the MPU reads out a method that is stored in the ROM or the like in advance and performs the method, so as to work as functional portions such as the potential calculating block 322, the change quantity calculating block 323, the potential changing block 324 and the like. In addition, the RAM works as functional portions such as the potential difference memory block 321 and the like.

In addition, among various types of data stored in the RAM or the ROM, a data that can be stored in a removable recording medium may be readable by a driver such as a hard disk drive, an optical disc drive, a flexible disc drive, a silicon disc drive, a cassette medium reader or the like, for example. In this case, the recording medium is a hard disk, an optical disc, a flexible disc, a CD, a DVD, a semiconductor memory or the like, for example.

The potential difference memory block 321 (potential difference memory block) stores potential differences to be applied between the divided electrodes 161a-161c of the first transparent electrode 161 and the opposed divided electrodes 162a-162f of the second transparent electrode 162 with respect to each wavelength of the light beams (each wavelength of the first light source 11A and the second light source 11B shown in Fig. 2 in this example). In addition, the potential difference memory block 321 stores potential differences for light condensing positions (here, two light condensing positions corresponding to one layer of a CD, a DVD and a BD as well as two layers of a BD, for example) and further with respect to environmental temperatures (for example, a range of the environmental temperature 0-40 degrees is divided into eight ranges of 5 degrees each). Note that the potential difference stored in the potential difference memory block 321 corresponds to the curve VS shown in Fig. 7B that will be described later in this embodiment.

The potential calculating block 322 (potential calculating block) reads out the potential differences corresponding to the wavelengths of the light beam, the light condensing positions and the environmental temperatures from the potential difference memory block 321, and it determines the potentials to be applied to the divided electrodes 161a-161c of the first transparent electrode 161 and the divided electrodes 162a-162f of the second transparent electrode 162 by using the read potential differences.

Here, an example of the method for the potential calculating block 322 to determine the potential to be applied will be described with reference to Figs. 7A and 7B. Fig. 7A is a graph showing an example of a relationship between the electrode potential and an aberration correction quantity, and Fig. 7B is an explanatory diagram for describing an example of a method for the potential calculating block 322 to determine the potentials to be applied to the divided electrodes. Fig. 7A shows an orientation characteristic of the liquid crystal 163 shown in Fig. 3 with the horizontal axis indicating the potential to be applied to the divided electrode and the vertical axis indicating the aberration correction quantity.

First, the case will be described, in which predetermined potentials V1(n) (n = 1-3) are applied to the divided electrodes 161a-161c of the first transparent electrode 161, predetermined potentials V21(n) (n = 1-3) are applied to the divided electrodes 162a, 162c and 162e of the second transparent electrode 162, and predetermined potentials V22(n) (n = 1-3) are applied to the divided electrodes 162b, 162d and 162f. In this case, the potential differences VD1 and VD2 between the divided electrodes 161a-161c of the first transparent electrode 161 and the divided electrodes 162a-162f of the second transparent electrode 162 are given by the following equations (1) and (2).

$$VD1 = V21(n) - V1(n) \quad \dots (1)$$

$$VD2 = V22(n) - V1(n) \qquad .... (2)$$

Furthermore, the liquid crystal 163 is orientated so as to generate aberration correction quantities $\Delta\varphi1$ and $\Delta\varphi2$ corresponding to the potential differences VD1 and VD2. In other words, in order to generate necessary aberration correction quantities $\Delta\varphi1$ and $\Delta\varphi2$, it is sufficient to apply potentials that generate potential differences VD1 and VD2 corresponding to the aberration correction quantities $\Delta\varphi1$ and $\Delta\varphi2$.

The horizontal axis in Fig. 7B indicates a distance from the center of the liquid crystal portion 16 (the center of the objective lens 17) in the radial direction shown in Fig. 2, and the vertical axis indicates a potential difference on the basis of a predetermined reference potential V20 (see Fig. 7A). The graph VS indicates the potential difference to be applied between the divided electrode of the first transparent electrode 161 and the divided electrode of the second transparent electrode 162 so as to correct aberration that is generated at the position from the center with respect to the light beam emitted from the first light source 11A and is generated by the objective lens of this embodiment, which is designed not to generate spherical aberration with respect to the light beam emitted from the second light source 11B. The potential difference memory block 321 shown in Fig. 6 stores the graph VS for each wavelength of the light beam and for each light condensing position in association with the environmental temperature, in a form of coordinates of articulation points of an approximate line graph, for example. In addition, the portion beneath the horizontal axis in Fig. 7B shows the divided electrode of the first transparent electrode 161 and the divided electrode of the second transparent electrode 162 so as to indicate their positions in the radial direction. Here, the first transparent electrode 161c and the second transparent electrodes 162e and 162f of the most inside portion are not shown in Fig. 7B.

Here, an example of a method for the potential calculating block 322 to determine the potential to be applied will be described with reference to Fig. 7B. First, the potential V1(n) is determined as a sum of the reference potential V20 and the potential difference of the graph VS at the position in the radial direction corresponding to the center position of the divided electrode of the first transparent electrode 161. Next, the potential V21(n) is determined as a difference between the potential V1(n) and the potential difference of the graph VS at the position in the radial direction corresponding to the center position of the outer divided electrode of the second transparent electrode 162. Then, the potential V22(n) is determined as a difference between the potential V1(n) and the potential difference of the graph VS at the position in the radial direction corresponding to the center position of the inner divided electrode of the second transparent electrode 162. In this way, the potential V1(n), the potential V21(n) and the potential V22(n) are determined.

With reference to Fig. 6 again, a functional structure of the DSP 32 will be described. The change quantity calculating block 323 (change quantity calculating block) determines potential change quantities $\Delta$V1 (n), $\Delta$V21(n) and $\Delta$V22(n) that are differences between the potentials V1(n), V21(n) and V22(n) determined by the potential calculating block 322 and potentials that are already applied, with respect to each divided electrode of the first transparent electrode 161 and the second transparent electrode 162.

The potential changing block 324 (potential changing block) sequentially changes the potentials to be applied to the divided electrodes of the first transparent electrode 161 and the second transparent electrode 162 to the potentials V1(n), V21(n) and V22(n) determined by the potential calculating block 322 based on the potential change quantities $\Delta$V1(n), $\Delta$V21(n) and $\Delta$V22(n) determined by the change quantity calculating block 323. In addition, the potential changing block 324 sequentially changes the potentials to be applied to the electrodes of the first transparent electrode 161 to the potentials V1(n) determined by the potential calculating block 322 based on the potential change quantities $\Delta$V1 (n), $\Delta$V21(n) and $\Delta$V22(n). After that, it sequentially changes the potentials to be applied to the electrodes of the second transparent electrode 162 to the potentials V21(n) and V22(n) determined by the potential calculating block 322 based on the potential change quantities $\Delta$V1(n), $\Delta$V21(n) and $\Delta$V22(n). Furthermore, the potential changing block 324 sequentially changes the potentials to be applied to the electrodes of the first transparent electrode 161 and the second transparent electrode 162 to the potentials V1(n), V21(n) and V22(n) determined by the potential calculating block 322 in the descending order of the potential change quantities $\Delta$V1(n), $\Delta$V21(n) and $\Delta$V22(n).

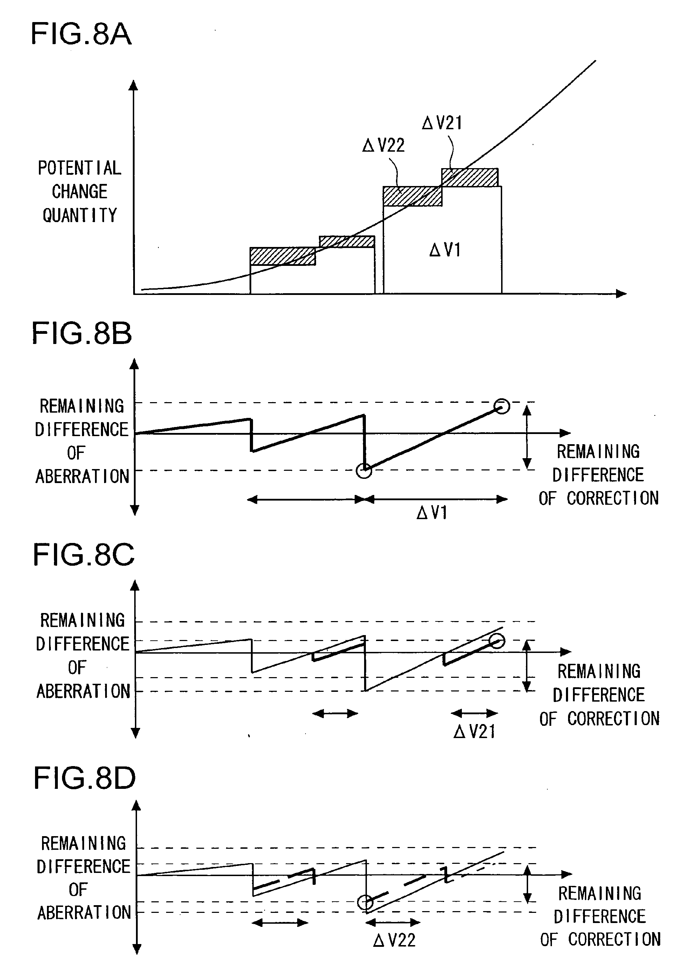

Next, with reference to Figs. 8A-8D, the potential changing method performed by the potential changing block 324 will be described. Fig. 8A shows a graph in which the vertical axis of Fig. 7B is replaced with potential change quantity. It is a graph showing positions in the radial direction and amplitudes of the potential change quantities $\Delta$V1(n), $\Delta$V21(n) and $\Delta$V22(n) of the divided electrodes. Figs. 8B-8D are graphs showing a remaining difference of aberration as a result of the potential change by the potential changing block 324, in which the horizontal axis indicates the position in the radial direction in the same manner as in Fig. 8A while the vertical axis indicates the remaining difference of aberration at the position in the radial direction.

The potential changing block 324 first changes the potentials of the divided electrodes of the first transparent electrode 161 by the potential change quantities $\Delta$V1(n) to be the potentials V1(n) as shown in Fig. 8B. Next, as shown in Fig. 8C, it changes the potentials of the divided electrodes of the second transparent electrode 162 by the potential change quantities $\Delta V21(n)$ to be the potentials $V21(n)$. Then, as shown in Fig. 8D, it changes the potentials of divided electrodes of the second transparent electrode 162 by the potential change quantities $\Delta V22(n)$ to be the potential $V22(n)$. In this way, the potentials of the divided electrodes of the first transparent electrode 161 and the second transparent electrode 162 are changed sequentially so that the remaining difference of aberration is gradually reduced. Thus, the detected signal that is an input of the RF amplifier 31 shown in Fig. 1 can be changed (increased) in a stable manner.

In this way, the potentials $V1(n)$, $V21(n)$ and $V22(n)$ to be applied to the divided electrodes of the first transparent electrode 161 and the second transparent electrode 162 are determined, and the potential change quantities $\Delta V1(n)$, $\Delta V21(n)$ and $\Delta V22(n)$ that are differences between the determined potentials $V1(n)$, $V21(n)$ and $V22(n)$ and the potentials that are already applied are determined. Since the potentials to be applied to the divided electrode of the first transparent electrode 161 and the second transparent electrode 162 are changed sequentially based on the potential change quantities $\Delta V1(n)$, $\Delta V21(n)$ and $\Delta V22(n)$, the detected signals that are supplied to the RF amplifier 31 shown in Fig. 1 during the adjustment time can be stabilized.

In addition, the potential differences to be applied between the divided electrodes 161a-161c of the first transparent electrode 161 and the opposed divided electrodes 162a-162f of the second transparent electrode 162 (here, coordinates of the articulation points of the approximate line graph VS shown in Fig. 7B) are stored for each wavelength of the light beam, and the potentials $V1(n)$, $V21(n)$ and $V22(n)$ to be applied are determined by reading out the potential differences corresponding to the wavelength of the light beam. Therefore, the potentials $V1(n)$, $V21(n)$ and $V22(n)$ to be applied to the divided electrodes can be determined easily in a short time.

Furthermore, the potential differences to be applied between the divided electrodes 161a-161c of the first transparent electrode 161 and the opposed divided electrodes 162a-162f of the second transparent electrode 162 (here, coordinates of the articulation points of the approximate line graph VS shown in Fig. 7B) are stored for each light condensing position, and the potentials $V1(n)$, $V21(n)$ and $V22(n)$ to be applied are determined by reading out the potential differences corresponding to the light condensing position. Therefore, the potentials $V1(n)$, $V21(n)$ and $V22(n)$ to be applied to the divided electrodes can be determined easily in a short time even in the case where the light condensing position alters.

In addition, the potential differences to be applied between the divided electrodes 161a-161c of the first transparent electrode 161 and the opposed divided electrodes 162a-162f of the second transparent electrode 162 (here, coordinates of the articulation points of the approximate line graph VS shown in Fig. 7B) are stored in association with the environmental temperature, and the potentials $V1(n)$, $V21(n)$ and $V22(n)$ to be applied are determined by reading out the potential differences corresponding to the environmental temperature. Therefore, the potentials $V1(n)$, $V21(n)$ and $V22(n)$ to be applied to the divided electrodes can be determined easily in a short time even in the case where the environmental temperature alters.

Furthermore, the second number of division that indicates how many areas the second transparent electrode 162 is divided in a concentric manner (six in this example) is integral multiple (double in this example) of the first number of division that indicates how many areas the first transparent electrode 161 is divided in a concentric manner (three in this example). In addition, the first transparent electrode 161 and the second transparent electrode 162 are divided equally into areas of the first number of division and the second number of division, respectively. Therefore, the setting can be performed roughly with the potentials $V1(n)$ to be applied to the divided electrodes of the first transparent electrode 161 and finely with the potentials $V21(n)$ and $V22(n)$ to be applied to the divided electrodes of the second transparent electrode 162, in a functionally separated manner. As a result, the potentials $V1(n)$, $V21(n)$ and $V22(n)$ to be applied to the divided electrodes can be determined easily.

Furthermore, the potentials to be applied to the divided electrodes 161a-161c of the first transparent electrode 161 are changed sequentially based on the potential change quantities $\Delta V1(n)$, and after that the potentials to be applied to the divided electrodes 162a-162f of the second transparent electrode 162 are changed sequentially based on the potential change quantities $\Delta V21(n)$ and $\Delta V22(n)$. Therefore, a large detected signal can be obtained quickly.

In addition, since the potential to be applied to the divided electrodes of the first transparent electrode 161 and the second transparent electrode 162 are changed in the descending order of the potential change quantities $\Delta V1(n)$, $\Delta V21(n)$ and $\Delta V22(n)$, a large detected signal can be obtained more quickly.

Note that the present invention can also be applied to the following embodiments.

(A) Although the first transparent electrode 161 and the second transparent electrode 162 are divided equally in the present embodiment, the first transparent electrode 161 and the second transparent electrode 162 may be divided into other sizes. For example, the first transparent electrode 161 and the second transparent electrode 162 may be divided into a larger number of areas at a position in which a variation of the potential difference to be applied for correcting aberration is larger in the radial direction. In this case, the aberration can be corrected effectively.

(B) Although the optical pickup device 1 has two light sources (the first light source 11A and the second light source 11B) in the present embodiment, it may have only one light source, or may have three or more light sources. The fewer the light sources are, the smaller the table stored in the potential difference memory block 321 can be.

(C) Although there are two light condensing positions in the present embodiment, it is possible to adopt another structure having one light condensing position or having three or more light condensing positions. The fewer the light condensing positions are, the smaller the table stored in the potential difference memory block 321 can be.

(D) Although the potential changing block 324 changes potentials of the first transparent electrode 161 and the second transparent electrode 162 in this order in the present embodiment, it may change potential sequentially with respect to all the divided electrodes of the first transparent electrode 161 and the second transparent electrode 162 in the ascending order of the potential change quantities $\Delta V1(n)$, $\Delta V21(n)$ and $\Delta V22(n)$.

(E) Although the DSP 32 works as the potential difference memory block 321, the potential calculating block 322, the change quantity calculating block 323 and the potential changing block 324 in the present embodiment, it is possible that at least one of the functional portions is realized with a circuit.

When the aberration correcting unit of the present invention is used, the detected signal during the adjustment time that is a time period necessary for changing the potentials to be applied to the divided electrodes can be stabilized. Then, if the optical pickup device is equipped with the aberration correcting unit of the present invention, it is possible to obtain the optical pickup device that can perform correction of the spherical aberration appropriately.

**Claims**

1. An aberration correcting unit comprising:

   a liquid crystal portion that includes a first transparent electrode having a plate-like shape divided into areas of a first number of division in a concentric manner, a second transparent electrode having a plate-like shape divided into areas of a second number of division that is larger than the first number of division in a concentric manner, and liquid crystal that is sandwiched between the first transparent electrode and the second transparent electrode, for generating a phase difference corresponding to a predetermined potential with respect to an incident light beam;
   a lens portion that condenses the light beam after passing through the liquid crystal portion onto a predetermined light condensing position;
   a driving portion that applies a predetermined potential for correcting aberration of the light beam to each of the divided electrodes of the first transparent electrode and the second transparent electrode; and
a control portion that controls the driving portion,

   **characterized by** a structure in that the control portion includes
   a potential calculating block that determines a potential to be applied to each of the divided electrodes of the first transparent electrode and the second transparent electrode,
   a change quantity calculating block that determines a potential change quantity that is a difference between the determined potential and a potential that is already applied with respect to each of the divided electrodes of the first transparent electrode and the second transparent electrode, and
   a potential changing block that changes the potentials to be applied to the divided electrodes of the first transparent electrode and the second transparent electrode sequentially to the potentials determined by the potential calculating block based on the potential change quantity.

2. The aberration correcting unit according to claim 1, **characterized by** a structure in which
   a wavelength of the light beam can be changed to a plurality of different wavelengths,
   the control portion further includes a potential difference memory block for storing potential differences to be applied between each of the divided electrodes of the first transparent electrode and each of the divided electrodes of the second transparent electrode that are opposed to those of the first transparent electrode with respect to each wavelength of the light beam, and
   the potential calculating block determines the potential to be applied by reading out the potential difference corresponding to the wavelength of the light beam from the potential difference memory block.

3. The aberration correcting unit according to claim 1 or claim 2, **characterized by** a structure in which
   the light condensing position can be changed to a plurality of different positions,
   the potential difference memory block stores the potential differences to be applied between each of the divided electrodes of the first transparent electrode and each of the divided electrodes of the second transparent electrode that are opposed to those of the first transparent electrode with respect to each of the light condensing positions, and
   the potential calculating block determines the potential to be applied by reading out the potential difference corresponding to the light condensing position from the potential difference memory block.

**4.** The aberration correcting unit according to any one of claim 1 to claim 3, **characterized by** a structure in which

the potential difference memory block stores the potential differences to be applied between each of the divided electrodes of the first transparent electrode and each of the divided electrodes of the second transparent electrode that are opposed to those of the first transparent electrode in association with environmental temperature, and

the potential calculating block determines the potential to be applied by reading out the potential difference corresponding to the environmental temperature from the potential difference memory block.

**5.** The aberration correcting unit according to any one of claim 1 to claim 4, **characterized by** a structure in which

the second number of division is an integral multiple of the first number of division, and

the first transparent electrode and the second transparent electrode are divided equally into areas of the first number of division and areas of the second number of division, respectively.

**6.** The aberration correcting unit according to any one of claim 1 to claim 5, **characterized by** a structure in that the potential changing block changes the potentials to be applied to the divided electrodes of the first transparent electrode sequentially to the potentials determined by the potential calculating block based on the potential change quantity, and after that it changes the potentials to be applied to divided electrodes of the second transparent electrode sequentially to the potentials determined by the potential calculating block based on the potential change quantity.

**7.** The aberration correcting unit according to claim 6, **characterized by** a structure in that the potential changing block changes the potentials to be applied to the divided electrodes of the first transparent electrode and the second transparent electrode sequentially to the potentials determined by the potential calculating block in the descending order of the potential change quantity.

**8.** An optical pickup device that projects a light beam onto an optical recording medium so as to perform at least one of reproducing information recorded on the optical recording medium and recording information on the optical recording medium, **characterized by** a structure in that the optical pickup device is equipped with the aberration correcting unit according to any one of claim 1 to claim 7.

**9.** An information reproducing apparatus comprising:

an optical pickup device equipped with the aberration correcting unit according to any one of claim 1 to claim 7 for projecting a light beam onto an optical recording medium so that information recorded on the optical recording medium is reproduced;

a medium driving device that drives the optical recording medium to rotate;

a moving device that moves the optical pickup device in the radial direction of the optical recording medium; and

an output device that obtains information recorded on the optical recording medium via the optical pickup device and reproduces the information.

**10.** A method for correcting aberration with an aberration correcting unit that is provided to an optical device, the aberration correcting unit is **characterized by** including:

a liquid crystal unit having a first transparent electrode having a plate-like shape divided into areas of a first number of division in a concentric manner, a second transparent electrode having a plate-like shape divided into areas of a second number of division that is larger than the first number of division in a concentric manner, and liquid crystal that is sandwiched between the first transparent electrode and the second transparent electrode, for generating a phase difference corresponding to a predetermined potential with respect to an incident light beam;

a lens unit that condenses the light beam after passing through the liquid crystal unit onto a predetermined light condensing position;

a driving unit that applies a predetermined potential for correcting aberration of the light beam to each of the divided electrodes of the first transparent electrode and the second transparent electrode, and

a control unit that controls the driving unit, and the method is **characterized by** comprising the steps of:

determining a potential to be applied to each of the divided electrodes of the first transparent electrode and the second transparent electrode;

determining a potential change quantity that is a difference between the determined potential and a potential that is already applied with respect to each of the divided electrodes of the first transparent electrode and the second transparent electrode; and

changing the potentials to be applied to the divided electrodes of the first transparent electrode and the second transparent electrode to the potentials determined by the potential calculating block in descending sequential order based on the potential change quantity.

EP 1 843 336 A2

# FIG.1

FIG.2

1

11A
12
13
14
21
2
17
16
15
11B
18
19

FIG.3

16

164
161
163
162
164

LB

## FIG.4A

## FIG.4B

# FIG.5

161

421

321

DA A1
DA A2
DA A3

A1
A2
A3

162

DA B1
DA B2
DA B3
DA B4
DA B5
DA B6

B1
B2
B3
B4
B5
B6

# FIG.6

FIG.7A

ABERRATION
CORRECTION
QUANTITY

$\Delta\varphi1$  $\Delta\varphi2$

VD1

VD0

VD2

V1(n)    V22(n)  V21(n)
                  V20

ELECTRODE POTENTIAL

FIG.7B

VS

POTENTIAL
DIFFERENCE

V21(1)

V1(1)

V1(2)   V22(1)

V21(2)

V22(2)

(V)

LENS CENTER

DISTANCE

161

162

# FIG.8A

POTENTIAL
CHANGE
QUANTITY

△V22

△V21

△V1

# FIG.8B

REMAINING
DIFFERENCE
OF
ABERRATION

REMAINING
DIFFERENCE
OF CORRECTION

△V1

# FIG.8C

REMAINING
DIFFERENCE
OF
ABERRATION

REMAINING
DIFFERENCE
OF CORRECTION

△V21

# FIG.8D

REMAINING
DIFFERENCE
OF
ABERRATION

REMAINING
DIFFERENCE
OF CORRECTION

△V22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001273663 A